# EUROPÄISCHE PATENTSCHRIFT

(11) **EP 1 916 752 B1**
(45) Veröffentlichungstag und Bekanntmachung des Hinweises auf die Patenterteilung: **25.07.2012**
(21) Anmeldenummer: 07115149.2
(22) Anmeldetag: 29.08.2007
(51) Int. Cl.: H02G 13/00

(54) **Befestigungseinrichtung für einen Blitzschutzmast oder eine Blitzschutzfangstange**
Mounting device for a lightning protection mast or a lightning arrester rod
Dispositif de fixation pour un mât de protection contre la foudre ou une barre de protection contre la foudre

(30) Priorität: 26.10.2006 DE 102006050605; 30.11.2006 DE 102006056564
(43) Veröffentlichungstag der Anmeldung: 30.04.2008
(73) Patentinhaber: DEHN + SÖHNE GMBH + CO KG, 92318 Neumarkt/Opf (DE)
(72) Erfinder: Duschek, Willibald, 92367 Pilsach (DE)
(74) Vertreter: Meissner, Bolte & Partner

(56) Entgegenhaltungen:
- DE-A1- 10 256 949
- DE-U1- 9 205 078

## Beschreibung

Die Erfindung betrifft eine Befestigungseinrichtung für einen Blitzschutzmast oder eine Blitzschutzfangstange mit einer Drei- bis n-Beinanordnung, in deren Schnittpunkt eine hülsenförmige Mast- oder Stangenaufnahme befindlich ist, gemäß Oberbegriff des Patentanspruchs 1.

Aus dem deutschen Gebrauchsmuster 94 07 712 U1 ist eine Halterung für eine Blitzfangstange vorbekannt, wobei dort zur Aufnahme des unteren Endes der Blitzschutzfangstange ein Beschwerungssockel Verwendung findet. Eine derartige Halterung ist bedingt durch die auftretenden Windkräfte nur zur Aufnahme relativ kurzer Fangstangen geeignet.

Aus der DE 102 56 949 A1 ist eine Vorrichtung zur Halterung mindestens einer Blitzfangstange auf einem Flachdach oder dergleichen zu schützendem Objekt vorbekannt. Diese Vorrichtung umfasst eine Drei- bis n-Beinanordnung, welche mit Beschwerungssockeln lösbar in Verbindung steht und wobei im Schnittpunkt der Beinanordnung die eigentliche Fangstange befestigt ist.

Die Beinanordnung besteht aus einem elektrisch leitfähigen Hohlprofil, wobei im Schnittpunkt eine Führungsbuchse für ein Fangstangen-Aufnahmerohr vorgesehen ist. Am schnittpunktfernen Ende des jeweiligen Hohlprofils ist ein im Wesentlichen vertikal verlaufender Bolzen befindlich, wobei über den Bolzen eine kraft- und/oder formschlüssige Verbindung zu jeweils mindestens einem der vorgesehenen Beschwerungssockel hergestellt wird. Die jeweiligen Beschwerungssockel weisen für die Befestigung eine passende Aufnahmeöffnung auf.

Aufgrund der Dreibein-Konfiguration ist diese Halterung auch in der Lage, längere Fangstangen sicher zu fixieren, ohne jedoch alle notwendigen Einsatzzwecke bezüglich noch größerer Fangstangen abzudecken.

Üblicherweise werden deshalb bei größeren Fangstangenhöhen die entsprechenden Maste ins Erdreich eingegraben und es erfolgt im Anschluss eine Verdichtung des Erdreichs um den Einbringungsort. Alternativ können die Maste in ein vorbereitetes Betonfundament gesetzt werden, was jedoch erhebliche Zeit und Kostenaufwendungen sowie umfangreiche Vorbereitungsarbeiten erfordert.

Zum Stand der Technik gehören Schraubfundamente, die beispielsweise im Stadt- oder Galabau z.B. für das Halten von Werbeschildern oder im Bereich der Verkehrstechnik Anwendung finden. Derartige Schraubfundamente werden beispielsweise von der Firma Krinner Schraubfundamente GmbH angeboten und vertrieben.

Bekannt sind außerdem Erdanker, die in der Lage sind, recht große Zug- und Druckbelastungen aufzunehmen. Hersteller derartiger Erdanker ist u.a. die Firma Keseas GmbH.

Sofern die vorstehend erläuterten Schraubfundamente oder Erdanker in der Lage sind, Stangen, z.B. für Werbeschilder, aufzunehmen, ist die Stabilität zum Fixieren von Teleskop-Rohren für Blitzschutzanlagen nicht ausreichend. Darüber hinaus ist beim denkbaren Einsatz von Schraubfundamenten des Standes der Technik der Erdungswiderstand zu groß, so dass eine sichere Blitzstromableitung ohne möglicherweise auftretende gefährliche Schrittspannungen nicht gegeben ist.

Aus dem Vorgenannten ist es daher Aufgabe der Erfindung, eine weiterentwickelte Befestigungseinrichtung für einen Blitzschutzmast oder eine Blitzschutzfangstange auf der Basis einer Drei- bis n-Beinanordnung anzugeben, wobei die Beinanordnung im Schnittpunkt eine hülsenförmige Mast- oder Stangenaufnahme aufweist. Die zu schaffende Befestigungseinrichtung soll einerseits auftretenden Windkräften standhalten und darüber hinaus einen geringstmöglichen Erdungswiderstand zum umgebenden Erdreich im Sinne eines effektiven Blitzschutzes gewährleisten.

Die Lösung der Aufgabe der Erfindung erfolgt durch eine Befestigungseinrichtung für einen Blitzschutzmast oder eine Blitzschutzfangstange mit einer Drei- bis n-Beinanordnung, in deren Schnittpunkt eine hülsenförmige Mast- oder Stangenaufnahme befindlich ist, gemäß der Merkmalskombination nach Patentanspruch 1, wobei die Unteransprüche mindestens zweckmäßige Ausgestaltungen und Weiterbildungen darstellen.

Bei der neuartigen Befestigungseinrichtung für einen Blitzschutzmast oder eine Blitzschutzfangstange ist die hülsen- oder rohrförmige Mast- oder Stangenaufnahme mit einem Schraubfundament verbunden oder es ist die Stangenaufnahme selbst Bestandteil eines derartigen Schraubfundaments.

Die Drei- bis n-Beine erstrecken sich in einem vorgegebenen Winkel zur Längsachse des Schraubfundaments.

Am schnittpunktfernen Ende mindestens eines der Beine ist mindestens eine Durchgangsbohrung zum Fixieren mindestens eines Erdnagels oder eines Tiefenerderstabs vorgesehen.

Im Bereich dieser Durchgangsbohrung sind darüber hinaus Rast- und/oder Klemmmittel zum Halten des eingebrachten Erdnagels oder des Tiefenerders befindlich.

Die Beine sind bei einer bevorzugten Ausführungsform als Hohlprofil ausgeführt und mit der Hülse oder dem Schraubfundament stoffschlüssig, wiederum bevorzugt durch Schweißen, verbunden.

Das Schraubfundament ist als konischer Einschraubdübel ausbildbar und weist an seiner Außenoberfläche ein Eintreibgewinde auf.

An der hülsenförmigen Mast- oder Stangenaufnahme sind umfangsseitig Justierschrauben zum Einstellen einer lotrechten Lage von Mast oder Fangstange befindlich.

Der Winkel zwischen den Beinen und der Längsachse des Schraubfundaments beträgt bei einer bevorzugten Ausführungsvariante etwa 80° bis 110°, bevorzugt 90°.

An mindestens einem der Beine der Dreibeinanordnung ist eine Eindrehhilfe anbringbar oder bereits dort fest fixiert.

Das Schraubfundament weist bevorzugt an seiner Unterseite oder Spitze ein oder mehrere Entwässerungsöffnungen auf, so dass eindringende Feuchtigkeit aus dem Bereich der hülsenförmigen Stangenaufnahme nach unten, in das Erdreich abgeleitet werden kann.

Die Beinlänge der Dreibeinanordnung ist teleskopartig veränderbar, insbesondere vergrößerbar.

Mindestens die Mast- oder Stangenaufnahme, das Schraubfundament, die Beinanordnung und die Erdnägel oder Tiefenerder bestehen aus einem leitfähigen, bevorzugt metallischen Material.

Die Beine der Dreibeinanordnung verlaufen radial zur Mast- oder Stangenaufnahme, wobei jeweils benachbarte Beine denselben Winkel einschließen.

Bei einer Ausführungsform einer Dreibeinanordnung schließen die benachbarten Beine jeweils einen Winkel von 120° ein.

Durch die mit dem Schraubfundament bzw. der Stangenaufnahme verbundene Drei- bis n-Beinanordnung steht eine Handhabe zur Verfügung, mit deren Hilfe auch ohne weitere Werkzeuge das Schraubfundament in das Erdreich eindrehbar ist.

Die Eindrehbewegung findet ihren Abschluss dann, wenn die Dreibeinanordnung auf der Erdoberfläche aufliegt oder aus optischen Gründen in die Erdoberfläche eingedrungen ist.

Im Anschluss an diesen Schritt werden z. B. Tiefenerderstäbe über die Durchgangsbohrung ebenfalls in das Erdreich eingetrieben und dann, z.B. mittels Klemmschrauben, mit dem jeweiligen Bein der Dreibeinanordnung verbunden.

Durch diese Maßnahme wird zum einen der gewünschte geringe Erdungswiderstand erreicht und zum anderen eine wesentlich höhere Stabilität der Befestigungseinrichtung gegenüber Windlasten erreicht.

Beim Ausführungsbeispiel wird davon ausgegangen, dass am schnittpunktfernen Ende mindestens eines Beines mindestens eine Durchgangsbohrung zum Fixieren des Erdnagels oder Tiefenerders 4 vorgesehen ist. Selbstverständlich liegt es im Sinne der Erfindung, anstelle einer Durchgangsbohrung auch einen Flansch zur Befestigung eines Tiefenerderstabs 4 auszubilden oder ein anderes geeignetes Mittel zum elektrischen und mechanischen Verbinden des jeweiligen Beines 2 mit dem jeweiligen Tiefenerderstab 4 vorzusehen.

Mit Hilfe der erfindungsgemäßen Befestigungseinrichtung ist in einfacher und kostengünstiger Weise eine Montage auch hoher Blitzschutzmasten möglich.

Der Aufbau des Dreibeins erfolgt durch Eindrehen des Schraubfundaments bis zur Auflage der Hohlprofile, die die Beine bilden, auf Erdniveau oder unterhalb der Erdoberflöche. Hier besteht ergänzend die Möglichkeit, die Hohlprofile durch Einstecken eines weiteren Profils quasi teleskopartig zu verlängern.

Die Senkrechtstellung des aufgenommenen Mastes oder der aufgenommenen Fangstange kann über die Zentrierschrauben, die sich am Umfang des Schraubfundaments oder der hülsenförmigen Stangenaufnahme befinden, einjustiert werden.

Weitere Erdungsmittel sind nicht erforderlich, da der Erdungswiderstand durch die Kombination der Wirkungen aus Schraubfundament und eingetriebenem Tiefenerder reduziert ist.

Zusätzlich kann die Standsicherheit sowie der Erdungswiderstand bei Bedarf durch das Eintreiben weiterer kuppelbarer Tiefenerder verbessert werden.

Die Erfindung soll nachstehend anhand eines Ausführungsbeispiels sowie unter Zuhilfenahme einer Figur näher erläutert werden.

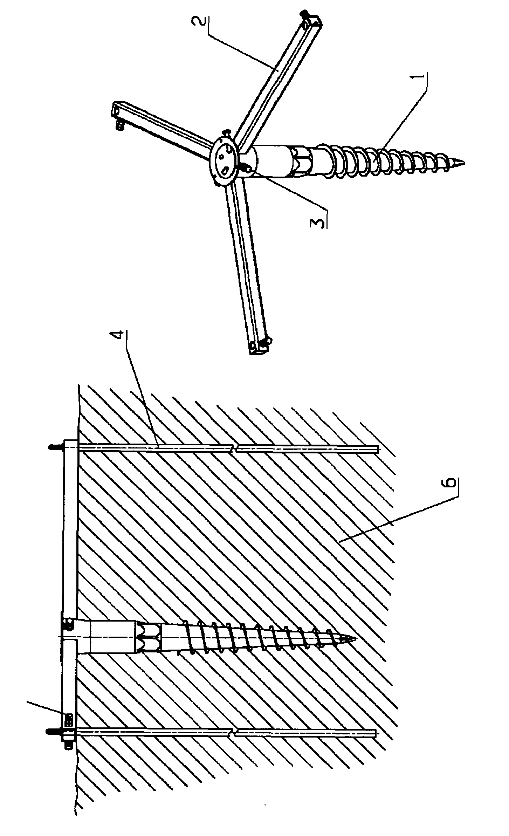

Die Figur zeigt hierbei in Schnittansicht eine Darstellung einer in das Erdreich eingetriebenen Befestigungseinrichtung sowie eine perspektivische Darstellung der Befestigungseinrichtung, jedoch noch ohne Tiefenerderstäbe (rechter Bildteil).

Die Befestigungseinrichtung gemäß Ausführungsbeispiel besteht aus einem Schraubfundament 1.

Dieses Schraubfundament 1 weist ein umlaufendes Außengewinde und eine konische Spitze auf.

Im Bereich der Spitze ist eine in der Figur nicht gezeigte Entwässerungsöffnung vorhanden.

Im oberen Teil geht das Schraubfundament 1 in eine hülsenförmige Mast- oder Stangenaufnahme 7 über.

Umfangsseitig an der hülsenförmigen Mast- oder Stangenaufnahme 7 angebrachte Klemmschrauben 3 dienen der Justierung eines aufnehmbaren Mast- oder Fangstangenendes (nicht gezeigt).

Im Bereich der hülsenförmigen Mast- oder Stangenaufnahme 7 sind gemäß Ausführungsbeispiel drei Beine 2 angebracht, wobei jeweils zwei benachbarte Beine einen Winkel von 120° einschließen.

Die Beine 2 sind bevorzugt durch Verschweißen, d.h. stoffschlüssig mit der hülsenförmigen Mast- oder Stangenaufnahme 7 verbunden.

Am schnittpunktfernen Ende der Anordnung aus den drei Beinen 2 der jeweiligen Beine ist mindestens eine Durchgangsbohrung 8 vorhanden.

Der Durchmesser dieser Durchgangsbohrungen 8 ist dabei auf den Außendurchmesser eines Erdnagels bzw. Tiefenerderstabs 4 abgestimmt.

Am außenseitigen Ende der Beine 2, d.h. im Bereich der Durchgangsbohrung 8, sind noch Klemmschrauben 5 befindlich, mit deren Hilfe der jeweilige Erdnagel oder Tiefenerderstab 4 fixierbar ist.

Selbstverständlich liegt es im Sinne der Erfindung, hierfür auch andere Befestigungsmittel einzusetzen, z.B. Mittel zum Einrasten oder aber Mittel zum formschlüssigen Verbinden durch Einschlagen eines Keils oder dergleichen.

Die Beine 2 sind, wie aus der Figur ersichtlich, als Hohlprofil ausgeführt und können gleichzeitig als Handhabe zum Eindrehen des Schraubfundaments 1 Verwendung finden.

Unter Beachtung der linksseitigen Darstellung gemäß Figur erfolgt das Eindrehen des Schraubfundaments 1 so lange, bis die Unterseite der Beine 2 mit der Oberfläche des Erdreichs 6 in Kontakt kommt.

Hiernach werden die Erdnägel oder Tiefenerderstäbe 4 über die Durchgangsbohrung 8 in das Erdreich 6 eingeschlagen und anschließend mit Hilfe der Klemmschraube fixiert.

Durch die kombinatorische Wirkung zwischen Schraubfundament 1 und den Erdnägeln oder Tiefenerderstäben 4 ergibt sich ein äußerst geringer Erdungswiderstand bei gleichzeitig hoher mechanischer Stabilität der Befestigungseinrichtung, insbesondere bezüglich auftretender Windlasten, die von einem Mast oder einer Fangstange auf die Befestigungseinrichtung übertragen werden.

Es besteht ergänzend die Möglichkeit, an den Beinen 2 eine Eindrehhilfe anzubringen, wobei diese Eindrehhilfe auch einsteckbar, d.h. nach vollständigem Eindrehen des Schraubfundaments 1 entfernbar ausgebildet sein kann.

Aufgrund der Hohlprofilform der Beine 2 besteht die bereits erwähnte Möglichkeit des Verlängerns der jeweiligen Beine mit nochmals erhöhter mechanischer Stabilität der Befestigungseinrichtung.

Mindestens die Mast- oder Stangenaufnahme 7, das Schraubfundament 1, die Anordnung aus den Beinen 2 und die Erdnägel oder Tiefenerderstäbe 4 werden aus einem leitfähigen Material, insbesondere Metall gefertigt. Aus der Figur ist ersichtlich, dass die Beine 2 radial zur Mast- oder Stangenaufnahme 7 verlaufen, wobei jeweils zwei benachbarte Beine denselben Winkel einschließen.

Das gezeigte Beispiel umfasst jeweils eine Durchgangsbohrung 8 je Bein 2.

Es ist hier aber auch eine Anordnung denkbar, die mehrere Durchgangsbohrungen aufweist, die entweder der Aufnahme mehrerer Tiefenerderstäbe 4 je Bein 2 dienen oder die es ermöglichen, einen entsprechenden Tiefenerderstab 4 an einem anderen, leicht versetzten Ort einzubringen, wenn sich das Einschlagen bei einem ersten Versuch, z.B. aufgrund von im Erdreich befind-lichem Gestein, als nicht erfolgreich erwies.

Gemäß der figürlichen Darstellung schließt die hülsenförmige Mast- oder Stangenaufnahme 7 in etwa mit der Oberkante des Hohlprofils der Beine 2 ab. Alternativ kann die hülsenförmige Mast- oder Stangenaufnahme 7 aber auch als längere, nach oben hoch stehende Rohrhülse ausgeführt sein, um eine bessere Verankerung des hierin aufnehmbaren Mastendes zu bewirken.

Falls ein Abspannen z.B. einer sehr langen Blitzfangstange notwendig ist, können untere Abspannpunkte am schnittpunktfernen Ende der Dreibeinanordnung, z.B. in Form von Hülsen vorgesehen sein.

Aus Untersuchungen hat sich gezeigt, dass die vorgestellte Befestigungseinrichtung leicht von einer Person in das Erdreich eingebracht werden kann. Damit kann z.B. bei open-air-Veranstaltungen für einen sicheren Blitzschutz gesorgt werden. Ebenso leicht wie die Befestigungseinrichtung eingebracht werden kann, ist auch deren Entfernen wieder möglich. Eine Beschädigung des Bodens oder eine nachhaltige Beeinflussung desselben, wie z.B. bei Betonfundamenten, ist nicht gegeben.

Bezugszeichenliste

1 Schraubfundament

2 Bein

3 Klemmschraube

4 Erdnagel / Tiefenerderstab

5 Klemmschraube

6 Erdreich

7 hülsenförmige Mast- oder Stangenaufnahme

8 Durchgangsbohrung

## Patentansprüche

1. Befestigungseinrichtung für einen Blitzschutzmast oder eine Blitzschutzfangstange mit einer Drei- bis n-Beinanordnung, in deren Schnittpunkt eine hülsenförmige Mast- oder Stangenaufnahme (7) befindlich ist,
**dadurch gekennzeichnet, dass**
die hülsenförmige Mast- oder Stangenaufnahme (7) mit einem Schraubfundament (1) verbunden oder Bestandteil eines derartigen Schraubfundaments (1) ist, wobei sich die Drei- bis n-Beine (2) in einem vorgegebenen Winkel zur Längsachse des Schraubfundaments erstrecken, am schnittpunktfernen Ende mindestens eines Beines (2) mindestens eine Durchgangsbohrung (8) zum Fixieren mindestens eines Erdnagels oder eines Tiefenerders (4) vorgesehen ist, wobei im Bereich der Durchgangsbohrung (8) ein Rast- und/oder Klemmmittel (5) zum Halten des Erdnagels oder des Tiefenerderstabs (4) befindlich ist.

2. Befestigungseinrichtung nach Anspruch 1,
**dadurch gekennzeichnet, dass**
die Beine (2) als Hohlprofil ausgeführt und mit der hülsenförmigen Mast- oder Stangenaufnahme (7) oder dem Schraubfundament (1) stoffschlüssig verbunden sind.

3. Befestigungseinrichtung nach Anspruch 1 oder 2,
**dadurch gekennzeichnet, dass**
das Schraubfundament (1) als konischer Einschraubdübel ausgebildet ist.

4. Befestigungseinrichtung nach einem der vorangegangenen Ansprüche,
**dadurch gekennzeichnet, dass**
an der hülsenförmigen Mast- oder Stangenaufnahme (7) Justierschrauben (3) zum Einstellen einer lotrechten Lage von Mast oder Fangstange vorgesehen sind.

5. Befestigung nach einem der vorangegangenen Ansprüche,
**dadurch gekennzeichnet, dass**
der vorgegebene Winkel im Bereich zwischen 80° und 110°, bevorzugt bei 90° liegt.

6. Befestigungseinrichtung nach einem der vorangegangenen Ansprüche,
**dadurch gekennzeichnet, dass**
an mindestens einem der Beine (2) eine Eindrehhilfe angebracht oder anbringbar ist.

7. Befestigungseinrichtung nach einem der vorangegangenen Ansprüche,
**dadurch gekennzeichnet, dass**
das Schraubfundament (1) eine Entwässerungsöffnung aufweist.

8. Befestigungseinrichtung nach einem der vorangegangenen Ansprüche,
**dadurch gekennzeichnet, dass**
die Beinlänge teleskopartig veränderbar, insbesondere vergrößerbar ist.

9. Befestigungseinrichtung nach einem der vorangegangenen Ansprüche,
**dadurch gekennzeichnet, dass**
mindestens die Mast- oder Stangenaufnahme (7), das Schraubfundament (1), die Beinanordnung (2) und die Erdnägel oder Tiefenerderstäbe (4) aus einem leitfähigen Material bestehen.

10. Befestigungseinrichtung nach einem der vorangegangenen Ansprüche,
**dadurch gekennzeichnet, dass**
die Beine (2) radial zur Mast- oder Stangenaufnahme (7) verlaufen, wobei jeweils zwei benachbarte Beine (2) denselben Winkel einschließen.

## Claims

1. Fixing device for a lightning protection pole or a lightning protection air terminal rod having a three to n leg assembly in whose point of intersection a sleeve-shaped pole or rod receptacle (7) is located,
**characterized in that**
the sleeve-shaped pole or rod receptacle (7) is connected to a screw base (1) or is part of such a screw base (1), wherein the three to n legs (2) extend at a predefined angle relative to the longitudinal axis of the screw base, at least one through bore (8) for fixing at least one earth nail or earth rod (4) is provided at the end of at least one leg (2), the end being away from the point of intersection, with a snap-in and/or clamping means (5) for holding the earth nail or the earth rod (4) being located in the region of the through bore (8).

2. Fixing device according to claim 1,
**characterized in that**
the legs (2) are designed as hollow sections and are connected to the sleeve-shaped pole or rod receptacle (7) or the screw base (1) by material engagement.

3. Fixing device according to claim 1 or 2,
**characterized in that**
the screw base (1) is designed as a conical screw-in dowel.

4. Fixing device according to one of the preceding claims,
**characterized in that**
adjusting screws (3) for adjusting a perpendicular position of the pole or air terminal rod are provided on the sleeve-shaped pole or rod receptacle (7).

5. Fixing device according to one of the preceding claims,
**characterized in that**
the predefined angle is in the range between 80° and 110°, preferably at 90°.

6. Fixing device according to one of the preceding claims,
**characterized in that**
a screw-in aid is mounted or can be mounted on at least one of the legs (2).

7. Fixing device according to one of the preceding claims,
**characterized in that**
the screw base (1) comprises a drainage hole.

8. Fixing device according to one of the preceding claims,
**characterized in that**
the length of the legs can be varied, specifically increased, telescopically.

9. Fixing device according to one of the preceding claims,
**characterized in that**
at least the pole or rod receptacle (7), the screw base (1), the leg assembly (2) and the earth nails or earth rods (4) are made of a conductive material.

10. Fixing device according to one of the preceding claims,
**characterized in that**
the legs (2) run radially with respect to the pole or rod receptacle (7), wherein two adjacent legs (2) enclose the same angle.

## Revendications

1. Dispositif de fixation pour un mât antifoudre ou une barre de protection contre la foudre avec un agencement comprenant trois à n jambes, au point d'intersection desquelles se trouve un récepteur en forme de douille (7) pour le mât ou pour la barre,
**caractérisé en ce que** le récepteur en forme de douille (7) est relié à un ancrage à vis (1) ou est un élément constitutif d'un tel ancrage à vis (1), tel que les trois à n jambes (2) s'étendent sous un angle prédéterminé par rapport à l'axe longitudinal de l'ancrage à vis, à l'extrémité, éloignée du point d'intersection, d'au moins une jambe (2) il est prévu au moins un perçage traversant (8) pour fixer au moins un clou ou une tige à planter en terre (4), et dans lequel il est prévu un moyen d'enclenchement et/ou de serrage (5), qu'il se trouve dans la région du perçage traversant (8), pour le maintien du clou ou de la tige (4).

2. Dispositif de fixation selon la revendication 1,
**caractérisé en ce que** les jambes (2) sont réalisées sous forme de profilés creux et sont reliées en coopération de matière avec le récepteur en forme de douille (7) ou avec l'ancrage à vis (1).

3. Dispositif de fixation selon la revendication 1 ou 2,
**caractérisé en ce que** l'ancrage à vis (1) est réalisé sous forme de manchon conique à visser.

4. Dispositif de fixation selon l'une des revendications précédentes,
**caractérisé en ce qu'**il est prévu des vis de réglage (3) sur le récepteur en forme de douille (7), pour régler une position verticale du mât ou de la barre.

5. Dispositif de fixation selon l'une des revendications précédentes,
**caractérisé en ce que** l'angle prédéterminé est dans la plage entre 80° et 110°, de préférence environ 90°.

6. Dispositif de fixation selon l'une des revendications précédentes,
**caractérisé en ce qu'**un accessoire de rotation est monté ou susceptible d'être monté sur l'une au moins des jambes (2).

7. Dispositif de fixation selon l'une des revendications précédentes,
**caractérisé en ce que** l'ancrage à vis (1) comporte une ouverture d'évacuation d'eau.

8. Dispositif de fixation selon l'une des revendications précédentes,
**caractérisé en ce que** la longueur des jambes est modifiable de manière télescopique, en particulier **en ce qu'**elle peut être augmentée.

9. Dispositif de fixation selon l'une des revendications précédentes,
**caractérisé en ce qu'**au moins le récepteur (7) pour le mât ou pour la barre, l'ancrage à vis (1), l'agencement de jambes (2) et les clous ou les tiges (4) à planter en terre sont en un matériau conducteur.

10. Dispositif de fixation selon l'une des revendications précédentes,
**caractérisé en ce que** les jambes (2) s'étendent radialement par rapport au récepteur (7), et deux jambes respectivement voisines (2) définissent le même angle.
